# EUROPEAN PATENT SPECIFICATION

(11) **EP 1 599 526 B1**
(45) Date of publication and mention of the grant of the patent: **13.06.2012**
(21) Application number: 04715774.8
(22) Date of filing: 27.02.2004
(51) Int. Cl.: C08G 18/79

(54) **PREPARATION OF ISOCYANURATE GROUP CONTAINING POLYISOCYANATE MIXTURES**
HERSTELLUNG VON ISOCYANURATGRUPPENHALTIGEN POLYISOCYANATMISCHUNGEN
PREPARATION D'UN GROUPE ISOCYANURATE RENFERMANT DES MELANGES DE POLYISOCYANATES

(30) Priority: 28.02.2003 US 450842 P
(43) Date of publication of application: 30.11.2005
(73) Proprietor: Dow Global Technologies LLC, Midland, MI 48674 (US)
(72) Inventor: DAUSSIN, Rory, D., Bellaire, TX 77401 (US); ARGYROPOULOS, John, N., Scott Depot, WV 25560 (US); JIMENEZ, Jorge, Lake Jackson, TX 77566 (US); BHATTACHARJEE, Debkumar, Lake Jackson, TX 77566 (US)
(74) Representative: Raynor, John
(86) International application number: PCT/US2004/006100
(87) International publication number: WO 2004/078820

(56) References cited:
- GB-A- 2 221 465
- US-A- 4 454 317
- US-A- 6 090 939
- US-B1- 6 479 564
- PATENT ABSTRACTS OF JAPAN vol. 1999, no. 14, 22 December 1999 (1999-12-22) & JP 11 240936 A (MITSUBISHI GAS CHEM CO INC), 7 September 1999 (1999-09-07)

## Description

The present invention relates to isocyanurate polyisocyanate compositions, derived from bis(isocyanatomethyl)cyclohexane and to a process for the preparation of such isocyanurate based compositions.

For the production of high-quality one- or two-component polyurethane adhesives and high-quality, light-stable, weathering-resistant, one- or two-component polyurethane surface coating materials, the polyisocyanate component used is generally an isocyanurate group-containing polyisocyanate mixture.

These products are generally obtained by preferably trimerizing aliphatic and/or cycloaliphatic diisocyanates, for example 1,6-hexamethylene diisocyanate (HDI) or 1-isocyanato-3,5,5-trimethyl-3-isocyanatomethylcyclohexane (IPDI) in the presence of a trimerization catalyst.

JP 11 240936 aims to obtain an oligomer derived from bis (isocyanatomethyl) cyclohexane, having excellent weather resistance, drying properties and adhesivity of coated film, useful for a polyurethane coating material, an adhesive, a binder, etc. This document describes an oligomer derived from 1,4-bis(isocyanatomethyl) cyclohexane and having 300-20,000 number-average molecular weight. An isocyanurate oligomer is obtained by a trimerization catalyst such as a tetraalkylammonium salt, an organic acid an alkali metal salt or the like.

US 4,454,317 describes a process for the trimerization of diisocyanates in the presence of a catalyst comprising quaternary ammonium salts of organic acids having a given formula. The catalyst is present in an amount of 0.02 to 0.1% by weight calculated on the weight of the compound to be trimerized and the reaction is carried out at a temperature ranging from 40 to 120°C. Example B11 employs 1,4-bis(isocyanatomethyl)cyclohexane as the diisocyanate.

GB 2 221 465 describes a process for the production of an isocyanurate-containing polyisocyanate comprises heating an organic diisocyanate to a temperature of from 100 to 275 °C in the presence of a catalytic amount of an organic compound containing at least one aliphatic tertiary amine group and at least one aliphatic hydroxy group and having a molecular weight of not more than 500 for from 0.1 to 360 minutes. Example 41 employs 1,4-bis(isocyanatomethyl)cyclohexane and triethanolamine.

As a consequence of the trend toward environmentally acceptable systems, there is a demand for weathering-resistant coating with high-solids polyurethane systems having low viscosity, yet retaining good processing properties. It is also desired that the coatings retain a good balance between the hardness and flexibility of the coating.

It is an object of the present invention to provide low-viscosity, isocyanurate polyisocyanates which are stable and have excellent properties when used in surface coatings.

The present invention is directed to an isocyanurate polyisocyanate composition comprising the reaction product of a mixture of 1,3-bis(isocyanotomethyl)cyclohexane and 1,4-bis(isocyanotomethyl)cyclohexane isomers with the proviso that the isomeric mixture comprises at least 5 weight percent of the 1,4-isomer.

In another aspect, the present invention is directed to an isocyanurate polyisocyanate composition as disclosed above which are further modified by the addition of a compound containing one or more groups reactive to isocyanate, such as a hydroxyl or primary or secondary amine group.

In a further embodiment, the present invention is directed to a process for the preparation of an isocyanurate polyisocyanate mixture comprising partially cyclizing an organic diisocyanate in the presence of a trimerization catalyst, deactivating the trimerization catalyst when the cyclization is complete, wherein the diisocyanate comprises a mixture of 1,3-bis(isocyanotomethyl)cyclohexane and 1,4-bis(isocyanotomethyl)cyclohexane isomers with the proviso that the isomeric mixture comprises at least 5 weight percent of the 1,4-isomer.

Also disclosed are coatings prepared from the isocyanurate polyisocyanate composition or such composition modified with an hydroxyl or amine compound.

In yet a further aspect, the present invention is an isocyanurate polyisocyanate composition as disclosed above which are modified via reaction with additional isocyanate to form allophonate or biuret modified compositions.

In yet another aspect, the present invention is the production of modified isocyanurate polyisocyanates comprising the reaction of bis(isocyanotomethyl)cyclohexane with a monol, diol, diamine, or a monoamine, and optionally a trimerization catalyst in situ resulting in an alkane, polyalkylene oxide, polyester or polytetramethylene oxide modified trimer. Alternatively, the prepolymer, formed by reaction of the isocyanate with a monol, diol, diamine, or monoamine, can be modified by the reaction of additional isocyanate to form allophanate or biuret modified prepolymers which can then be mixed with a trimerization catalyst giving an allophanate or biuret modified trimer.

The present invention is directed to a isocyanurate isocyanate composition, and modifications thereof, prepared from bis(isocyanatomethyl)cyclohexane. The isocyanate comprises a mixture of 1,3-bis(isocyanotomethyl)cyclohexane and 1,4-bis(isocyanotomethyl)cyclohexane isomers, with the proviso said isomeric mixture comprises at least 5 weight percent of the 1,4-isomer. These cycloaliphatic diisocyanates are represented by the following structural Formulae I through IV:

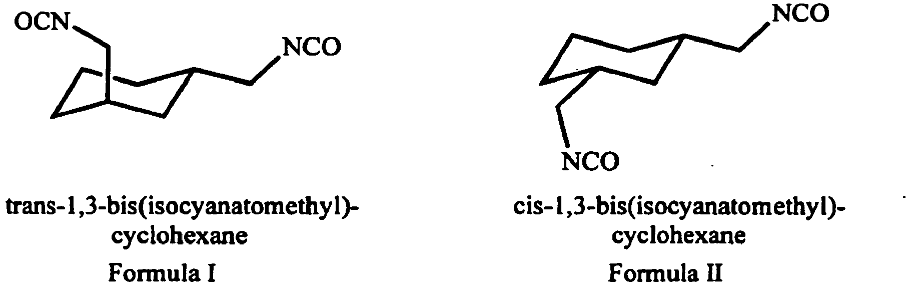

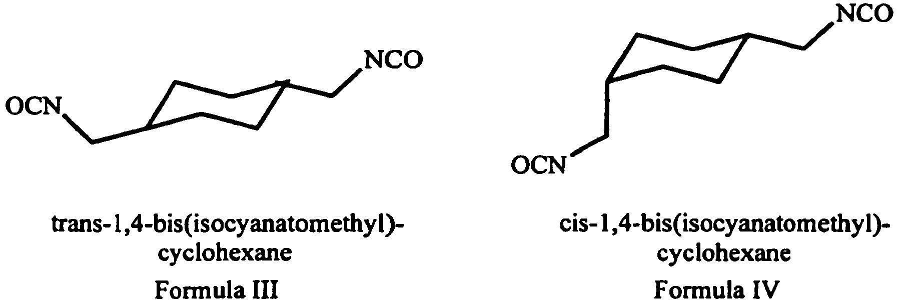

These cycloaliphatic diisocyanates may be used in admixture as manufactured from, for example, the Diels-Alder reaction of butadiene and acrylonitrile, subsequent hydroformylation, then reductive amination to form the amine, that is, cis-1,3- bis(isocyanotomethyl)cyclohexane, trans-1,3-bis(isocyanotomethyl)cyclohexane , cis-1,4- bis(isocyanotomethyl)cyclohexane and trans-1,4- bis(isocyanotomethyl)cyclohexane, followed by reaction with phosgene to form the cycloaliphatic diisocyanate mixture. The preparation of the bis(aminomethyl)cyclohexane is described in U.S. Patent 6,252,121.

In one embodiment, the isocyanurate isocyanate composition is derived from a mixture containing from 5 to 45 wt percent of the 1,4 isomers. The isomeric mixture comprises at least 5, more preferably at least 10, most preferably at least 30 and even more preferably at least 40 weight percent of the 1,4-isomers.

Optionally, other multifunctional aliphatic or alicyclic isocyanates can be used in the reaction mixture. Illustrative of such isocyanates are 2,4- and 2,6-toluene diisocyanates, 4.4'-biphenylene diisocyanate, 4,4'-diphenylmethane diisocyanate, meta- and para-phenylene diisocyanates, 1,5-naphthylene diisocyanate, 1,6-hexamethylene diisocyanate, bis(2-isocyanato)fumarate, 4,4'-dicyclohexanemethylene diisocyanate, 1,5-tetrahydronaphthylene diisocyanate, and isophorone diisocyanate. The minor amounts of other multifunctional isocyanates can range from 0.1 percent to 50 percent or more, preferably from 0 percent to 40 percent, more preferably from 0 percent to 30 percent, even more preferably from 0 percent to 20 percent and most preferably from 0 percent to 10 percent by weight of the total polyfunctional isocyanate used in the formulation.

Due to the defined isomer ratios, the isocyanurate polyisocyanates of the present invention have advantageous properties, such as high reactivity, low viscosity, good solubility and improved storage stability. In additions, coatings prepared from such isocyanurate polyisocyanates exhibit improved Vickers hardness to Gardner impact ratios. When used in coating application, the compositions also provide a coating with a good hardness to flexibility balance.

For the preparation of the isocyanurate group-containing polyisocyanates, the organic diisocyanates are cyclized in the presence of the trimerization catalyst and, if desired, in the presence of solvents and/or assistants, such as co-catalysts, expediently at elevated temperature, until the desired NCO content has been reached. The reaction is then terminated by deactivating the catalyst. If desired, the excess monomeric diisocyanate is separated off, preferably by distillation with the aid of a thin-film evaporator. Depending on the type and amount of catalyst used and on the reaction conditions used, isocyanurate group-containing polyisocyanate mixtures are obtained which can have different content of isocyanurate groups or oligomeric isocyanates. As used herein, the term trimer will generally refer to molecules containing one or more isocyanurate ring structures. For purposes of this invention, an isocyanate containing one isocyanurate ring structure is referred to herein as IR1. Molecules containing two isocyanurate ring structures are referred to herein as IR2. As a general class, unless otherwise noted, compounds containing 2 or more isocyanurate rings based on the polyisocyanates of the present invention are referred to as oligomeric trimers.

Examples of suitable trimerization catalyst are tertiary amines, phosphines, alkoxides, metal oxides, hydroxides, carboxylates and organometallic compounds. Examples of trimerization catalysts which have proven highly successful are tetraalkylammonium hydroxide, tris-(N,N-dialkylaminoalkyl)-s-hexahydrotriazines and organic salts of weak acids containing tetraalkylammonium groups or hydroxyalkylammonium groups, for example tris-(N,N-dimethylaminoproyl)-s-hexahydrotriazine, trimethyl-N-w-hyroxypropylammonium 2-ethylhexanoate and N,N-dimethyl-N-hydroxyethyl-N-2-hydroxypropylammonium hexanoate. Due to the their simple preparation and purification, preferred trimerization catalysts are trialkylhydroxyalkylammonium salts, for example N,N,N-trimethyl-N-2-hydroxypropylammonium p-tert-butylbenzoate and in particular N,N,N-trimethyl-N-2-hydroxypropylammonium 2-ethylhexanoate. Trimerization catalysts, which can also cause the formation of uretedione groups and oligomeric isocyanurate groups as byproducts, are usually used in an amount of from 0.001 to 0.5 percent by weight, preferably from 0.005 to 0.1 percent by weight, based on the weight of the diisocyanate. The trimer may also be produced by the use of a heterogeneous catalyst.

Alternatively, the isocyanurate trimer may be prepared by trimerization with a heterogeneous catalyst, see for example WO 93/18014. Proper control of the solid support and the active groups on the catalyst can result in the formation of an oligomeric mixture of isocyanurate trimers with very narrow polydispersity, that is, a product containing less than 50 percent IR1 and more than 25 percent of IR2, preferably less than 40 percent IR1 and more than 30 percent IR2. This type of distribution provides high average molecular weight products with low viscosity.

After the desired amount of isocyanurate groups has formed, which can be determined analytically by determination of the of the NCO content of the reaction mixture, the trimerization catalyst is usually deactivated. Examples of suitable deactivators are inorganic and organic acids, the corresponding acid-halides and alkylating agents. Specific examples of deactivator include phosphoric acid, monochloroacetic acid, dodecylbenzene/sulfonic acid, benzoyl chloride, dimethyl sulfate and dibutyl phosphate. The deactivators can be employed in amount from 1 to 200 mole percent, preferably from 20 to 100 mole percent, based on the amount of trimerization catalyst. The catalyst can also be deactivated by thermolysis. Typical thermal deactivation temperatures are greater than 130°C and lower than the decomposition temperatures of the isocyanate, generally less than 200°C.

For the preparation of the isocyanurate, the organic diisocyanate are partially cyclized at from 30 to 120°C, preferably at from 60 to 110°C, in the presence of the trimerization catalysts, advantageously under an atmosphere of gases which are inert under the reaction conditions, for example nitrogen. Generally the cyclized reaction is carried out to leave a monomer content of less than 80 percent. Preferably the reaction is carried out to give a monomer content of less than 70 percent. Generally at high conversions the amount of monomer remaining in the reaction mixture is between 20 and 40 percent. More preferably the reaction is carried out to give a final monomer content of less than 65 percent. The desired NCO content of the reaction mixture (that is, trimer and unreacted monomer) is generally from 20 to 40 percent by weight. Preferably the desired NCO content of the reaction mixture is from 22 to 38 percent by weight and more preferably from 23 to 35 percent by weight. After the desired NCO content is reached, the trimerization catalyst is deactivated and the isocyanurate formation is thus ended. After removal of the unreacted monomer, the NCO content of the trimer and trimer oligomers (IR1, IR2, and higher oligomers) is generally from 12 to 30 percent by weight and more preferably from 15 to 21 percent by weight of the isocyanurate polyisocyanate.

The reaction product will contain monomeric species, for example, isocyanurates having a single ring structure, as well as oligomeric species, for example, isocyanurates having two or more ring structures. Preferably IR1 is present in the composition from 20 to 80 percent by weight of the composition. More preferably the IR1 content is from 25 to 70 percent by weight of the composition. Most preferably the IR1 content is from 25 to 65 percent by weight of the composition. In some applications, it may be desired that the IR1 content is from 30 to 60 percent by weight of the composition. Generally the composition will contain from 5 to 40 percent by weight of IR2. It is not necessary for the IR1 and IR2 components to be 100 percent of the composition as higher oligomers may also be present.

For the present invention, different polyisocyanates may be mixed prior to the trimerization step, or trimers and higher oligomers of the individual isomers may be formed and then blended together. For example, trimers and higher oligomers of the 1,3-and 1,4-isomers of bis(isocyanatomethyl)cyclohexane may be separately produced and the products mixed, or the 1,3- and 1,4-isomers can be present together before the trimerization step. In a similar manner, the isocyanurate polyisocyanates containing multifunctional isocyanates other than bis(isocyanatomethyl)cyclohexane can be produced by having the other multifunctional isocyanates present prior to trimerization or produced separately and blended in with the isocyanurate polyisocyanates produced from the bis(isocyanatomethyl)cyclohexane isomers. It is generally preferred to produce isocyanurate polyisocyanates from the 1,3- and 1,4- isomers when both isomers are present in the initial reaction mixture. It is also preferred that any other multifunctional isocyanates be present prior to the start of or during the trimerization reaction.

In one embodiment of the present invention, it is preferred to use as the starting polyisocyanate a mixture of 1,3- and 1,4-bis(isocyanatomethyl)cyclohexane monomers with an additional cyclic or alicyclic isocyanate. In one embodiment, the 1,3-and 1,4-bis(isocyanatomethyl)cyclohexane monomer are used in combination with 1,6-hexamethylene diisocyanate (HDI), isophorone diisocyanate (IPDI) or a mixture thereof. When HDI and/or IPDI is used as an additional polyfunctional isocyanate in addition to the bis(isocyanatomethyl)cyclohexane, HDI and/or IPDI is added in an amount of up to 50 percent by weight of the total polyfunctional isocyanate. Preferably HDI and/or IPDI is added to comprises up to 40 percent by weight of the total polyfunctional isocyanate. More preferably, HDI and/or IPDI is added to comprise up to 30 percent by weight of the total polyfunctional isocyanate.

The production of the isocyanurate polyisocyanates of the present invention is preferably done in the absence of a solvent. If desired, a solvent may be used which is inert toward the respective starting materials. Preference is given to using organic solvents such as diethyl ether, tetrahydrofuran, acetone, 2-butanone, methyl isobutyl ketone, ethyl acetate, butyl acetate, benzene, toluene, chlorobenzene, o-dichlorolbenzene, xylene, methyoxyethyl acetate, methoxypropyl acetate, ethyl-3-ethoxy propionate, dimethylformamide, dimethylacetamide or solvent naphtha.

The formed isocyanurate polyisocyanates can undergo modification after formation. Optionally, prior to modification of the resulting trimer, the composition is distilled to remove residual isocyanate monomer. One modification is to react the isocyanurate polyisocyanates with a compound having at least one group which is reactive to isocyanate, such as amine or hydroxyl group. The modifications, in addition to providing the benefits of increased molecular weight, aid in controlling the viscosity and improve the miscibility of these materials for use in polymer applications. Generally the compounds reactive with an isocyanate have from 1 to 50 carbon atoms and preferably from 1 to 35 carbon atoms. Generally the compounds containing one or more isocyanate reactive groups will have a molecular weight of less than 2500, preferably less than 2000 and more preferably less than 1000. When the compound contains more than one moiety reactive with an isocyanate, compounds containing a combination of reactive groups can be used, for example hydroxyl and amine.

Compounds containing at least one hydroxyl group include linear and branched aliphatic alcohols, cycloaliphatic alcohols ,alkyl-substituted cycloaliphatic alcohols, and polyoxyalkylene derivatives. Optionally, polyester and polytetramethylene oxide derivatives known in the art can be advantageously used for this application. Such compounds are commercially available or can be produced by standard procedures known to those in the art. In a similar manner, amine compounds are commercially available or can be produced by reductive amination of the corresponding alcohol.

Examples of suitable monols include alkanols, such as methanol, ethanol, n-and iso-propanol, n-butanol, sec-butanol, n-pentanol, n-hexanol, octanol, nonanol, 2-ethylbutanol, 2,2,-dimethylhexanol, 2-ethylhexanol, cyclohexanol, methylcyclohexanol ethylcyclohexanol or a mixture thereof.

A preferred monol is a monol having one hydroxyl group at one end of a polyoxyalkylene backbone and a blocked hydroxyl or non-reactive functionality at the other end of the chain, such as polytetramethylene oxide derivatives available from The Dow Chemical Company under the designation CARBOWAX methoxypolyethylene glycol.

Examples of compounds containing 2 or more groups reactive to isocyanate include, ethylene glycol, diethylene glycol, triethylene glycol, 1,2- and 1,3-propanediol, neopentyl glycol, 1,2, 1,3-, 2,3- and 1,4-butanediol, 1,2- 1,3- and 1,5-pentanediol, hexanediol, propane-1,2-dithiol, butane-1, 2-dithiol, mercaptoethanol, mercaptopropanol, mercaptobutanol, ethylenediamine, tolyenediamine, isophoronediamine, cysteamine, ethanolamine, N-methylethanolamine, propanolamine, isopropanolamine, 2-(butylamino)ethaol, 2-(cyclohexylamino)ethanol, 2-amino-1-butanol, 2-(2'-aminoethoxy)ethanol or higher alkoxylation products of ammonia, 4-hydroxypiperidine, 1-hydroxyethylpiperazine, aminopropanethiol or bifunctional polyetherols or polyesterols. Preferably a diol is selected from ethylene glycol, propylene glycol, 1,4-butylene glycol, 2,3-butylene glycol, diethylene glycol, dipropylene glycol, dibutylene glycol or mixtures thereof are used.

Hydroxyl compounds may also be polyoxyalkylene alcohols having a molecular weight of up to 2500, preferably up to 2000, which are polyoxyethylene alcohols, polyoxypropylene alcohols and polyoxypropylene-polyoxyethylene alcohols. Suitable polyoxyalkylene alcohols of this type, which may contain the oxyalkylene groups bonded blockwise or randomly, can be prepared in a manner known per se by the polyaddition of ethylene oxide, 1,2-propylene oxide or mixtures thereof onto a mono or di-functional initiator molecule. Amine equivalents are commercially available under the Jeffamine tradename of Huntsman Corporation, or can be produced from the corresponding alcohol by reductive amination.

The modified isocyanurate polyisocyanates can be prepared by mixing the isocyanate reactive compound and the isocyanurate polyisocyanates in a temperature range of 70 to 110°C. Alternatively, the components can be blended at room temperature and heated under agitation to a temperature of from 70 to 110°C. If desired, a standard urethane forming catalyst known in the art can be added to promote the reaction.

In an alternative procedure, the isocyanate reactive compound can be first blended in a solvent. The mixture of the isocyanate reactive compound and the solvent is then mixed with the oligomeric trimer at elevated temperatures. This procedure takes advantage of the higher solubility of the low molecular weight oligomers to preferentially react the isocyanate reactive compound with the low molecular weight species, for example IR1. Such a procedure can result in a product having a narrow polydispersity and lower viscosity. The preferred temperature for this step is in the range of 60 to 120°C.

When the isocyanate reactive compound has one reactive isocyanate group, it is generally mixed in an amount of 35 or less wt percent with respect to the isocyanate composition. Preferably the isocyanate reactive compound is added at 30 wt percent or less with respect to the isocyanate composition. More preferably the isocyanate reactive compound is added at 25 wt percent or less. Generally 5 wt percent or greater of the compound having one reactive isocyanate group is mixed with the isocyanurate polyisocyanate mixture. When the isocyanate reactive compounds contains 2 or more isocyanate reactive groups, the compound is mixed with the isocyanurate polyisocyanate in an amount of 0.1 to 10 wt percent. Preferably the compound containing 2 or more isocyanate reactive groups is added in an amount from 1 to 8 wt percent.

In general, when the isocyanurate polyisocyanate is modified with a monol, the average functionality of the final oligomeric isocyanate composition is reduced. The viscosity of the final composition will depend on the oligomeric composition of the trimer, the amount of weight percent of monol as well as the molecular weight of the monol.

The modified trimer can be further modified by various procedures known to those skilled in the art. One such modification is to incorporate allophanate or biuret linkages, which further increases the molecular weight of the final product.

The allophanate or biuret extended trimers can be prepared by heating the modified trimers under agitation to elevated temperatures. The preferred temperature for this step is the range of 100 to 130°C. If desired, a catalyst which promotes allophanate or biuret formation can be added. Such catalysts include, zinc acetylacetonate, zinc 2-ethylhexanoate, cobalt 2-ethylhexanoate, cobalt naphthanate, lead linoresinate, and stannous octoate. Zinc acetyl acetonante and stannous octoate are preferred catalysts. When the desired level of conversion is obtained, a catalyst deactivator can be added. Examples of catalyst deactivators include acidic materials such as anhydrous hydrochloric acid, sulfuric acid, benzoyl chloride and bis-(2-ethyl-hexyl) phosphate. A ratio of 2 equivalents of catalyst stopper to each mole of catalyst ensures that the allophanate-forming reaction is stopped.

Alternatively, two-isocyanurate-ring ureas can be formed by reaction of the isocyanurate with water, the resulting ureas can be converted via reaction with residual isocyanate to form biurets.

Further modifications of the trimer include the addition of a carbodiimide catalyst, such as trialkylphosphate or a phospholene oxide after formation of the trimer. Reaction of residual isocyanato groups leads to carbodiimide-modified trimer that can react further with isocyanato groups to give a uretonimine-modified trimer. Addition of an acid, such as hydrochloric acid, will catalyze additional reaction of the uretonimine with isocyanato groups to give imino-s-triazine modified trimer. Catalyst (HCl) is removed by addition of solvent such as chlorobenzene, reflux solution to remove HCl, and then removal of solvent.

Carbodiimides may also be formed from the reaction of a monomeric diisocyanate in the presence of a carbodiimide catalyst The carbodiimide groups can react further with a monomeric diisocyanate to form a uretonimine-modified monomeric product. Addition of an acid as catalysts, facilitates further reaction of the uretonimines with monomeric diisocyanate to give a six-membered ring cyclic adducts, for example imino-s-triazines.

An alternative procedure for imino-s-triazine production is to add a carbodiimide catalyst to the trimer. The carobiimides formed from the reaction of the isocyanate groups can react with other isocyanate groups or monomeric diisocyanate or trimer oligomers to form uretonimines. Acid addition will catalyze the conversion of the uretonimines to imino-s-triazines.

In another embodiment of the present invention, the isocyanate composition can be mixed with a monol, diol, diamine, or a monoamine, and optionally a trimerization catalyst in situ resulting in an alkane, polyalkylene oxide, polyester or polytetramethylene oxide modified trimer. Alternatively, the prepolymer, formed by reaction of the isocyanate with a monol, diol, diamine, or monoamine, can be modified by the reaction of additional isocyanate to form allophanate or biuret modified prepolymers which can then be mixed with a trimerization catalyst giving an allophanate or biuret modified trimer. Preparation of such allophanate or biuret prepolymers, followed by trimerization, is known in the art, see for example, U.S. Patents 5,663,272 and 6,028,158.

For example, the allophanate modified isocyanates are prepared by reacting the isocyanate with an organic compound containing at least one hydroxyl group at a temperature from 50 to 200°C in the presence of a allophanate-trimer catalyst. The amount of the isocyanate reactive compound present is generally from 0.015 to 0.2, preferably 0.05 to 0.15, equivalent hydroxyl groups per equivalent of isocyanate present The reaction is carried out until the desired NCO group content is reached, at which time a catalyst deactivator is added to neutralize the catalyst. To produce a biuret modified isocyanate, an amine is substituted for the above-noted hydroxyl containing compound.

The isocyanurate polyisocyanates of the present invention are particularly useful for producing paints and varnishes, coatings, one or two component adhesives, and sealants. The isocyanurate polyisocyanates of the present invention are particularly suited for one or two component polyurethane surface coating materials, particularly environmentally etch-resistant top coats. Optionally when the isocyanurate polyisocyanates of the present invention or derivatives thereof are used in coating applications, the composition is generally mixed with a solvent, as disclosed above.

The following examples are provided to illustrate the present invention. The examples are not intended to limit the scope of the present invention and should not be so interpreted. All percentages are by weight unless otherwise noted.

### Examples

The ingredients and tests used in the examples are as described in the following glossary:
Trimer 1 - The triisocyanurate of an approximately 1:1 mixture of 1,3-bis(isocyanotomethyl)cyclohexane and 1,4- bis(isocyanotomethyl)cyclohexane with an equivalent weight of 349.
Trimer 2 - The triisocyanurate of isophorone diisocyanate (IPDI) commercially available from Bayer Corporation as Desmodur Z 4470 with an equivalent weight of 359.
Trimer 3 - The triisocyanurate of hexamethylene diisocyanate (HDI) commercially available from Bayer Corporation as Desmodur N 3390A with an eqivalent weight of 216.
Trimer 4 - The triisocyanurate of 1,4- bis(isocyanotomethyl)cyclohexane with an equivalent weight of 347.
Trimer 5 - The triisocyanurate of 1,3- bis(isocyanotomethyl)cyclohexane with an equivalent weight of 336.
Trimer 6 - The triisocyanurate of an approximately 1:1 mixture of 1,3-bis(isocyanotomethyl)cyclohexane and 1,4- bis(isocyanotomethyl)cyclohexane with an equivalent weight of 286.
Trimer 7 - The triisocyanurate of 1,4- bis(isocyanotomethyl)cyclohexane with an equivalent weight of 296.
Trimer 8 - The tnisocyanurate of 1,3- bis(isocyanotomethyt)cyelohexane with an equivalent weight of 321.
Trimer 9 The triisocyanurate of 1,4- bis(isocyanotomethyl)cyclohexane with an equivalent weight of 276.
Trimer 10 - The triisocyanurate of 1,3- bis(isocyanotomethyl)cyclohexane with an equivalent weight of 309.
Trimer 11 - The triisocyanurate of an approximately 1:1 mixture of 1,3-bis(isocyanotomethyl)cyclohexane and 1,4- bis(isocyanotomethyl)cyclohexane mixed with triisocyanurate of hexamethylene diisocyanate (HDI) commercially available from Bayer Corporation as Desmodur N 3390A at a 1/3 ratio. The equivalent weight is 290.
Trimer 12 - The triisocyanurate of an approximately 1:1 mixture of 1,3-bis(isocyanotomethyl)cyclohexane and 1,4- bis(isocyanotomethyl)cyclohexane mixed with triisocyanurate of hexamethylene diisocyanate (HDl) at a 1/1 ratio. The equivalent weight is 300.
Trimer 13 - The triisocyanurate of an approximately 1:1 mixture of 1,3-bis(isocyanotomethyl)cyclohexane and 1,4- bis(isocyanotomethyl)cyclohexane mixed with triisocyanurate of hexamethylene diisocyanate (HDI) at a 3/1 ratio. The equivalent weight is 309.
Trimer 14 - The triisocyanurate of an approximately 1:1 mixture of 1,3-bis(isocyanotomethyl)cyclohexane and 1,4- bis(isocyanotomethyl)cyclohexane mixed with triisocyanurate ofhexamethylene diisocyanate (HDI) at a 9/1 ratio. The equivalent weight is 313.
Trimer 15 - The triisocyanurate of an approximately 1:1 mixture of 1,3-bis(isocyanotomethyl)cyclohexane and 1,4- bis(isocyanotomethyl)cyclohexane blocked with methoxypolyethylene glycol at a ratio of 10wt percent relative to the trimer. The equivalent weight is 412.
Trimer 16 - The triisocyanurate of an approximately 1:1 mixture of 1,3-bis(isocyanotomethyl)cyclohexane and 1,4- bis(isocyanotomethyl)cyclohexane partially blocked with a linear aliphatic C10 alcohol at a ratio of 10wt percent relative to the trimer. The equivalent weight is 412.
Timer 17 - The triisocyanurate of an approximately 1:1 mixture of 1,3-bis(isocyanotomethyl)cyclohexane and 1,4. bis(isocyanotomethyl)cyclohexane partially blocked with a branched aliphatic C13 alcohol at a ratio of 10wt percent relative to the trimer. The equivalent weight is 428.
Trimer 18 - The triisocyanurate of an approximately 1:1 mixture of 1,3-bis(isocyanotomethyl)cyclohexane and 1,4- bis(isocyanotomethyl)cyclohexane with an equivalent weight of 364.
Trimer 19 - The triisocyanurate of an approximately 1:1 mixture of 1,3-bis(isocyanotomethyl)cyclohexane and 1,4- bis(isocyanotomcthyl)cyclohexanc partially blocked with a caprolactone based monol at a ratio of 10wt percent relative to the trimer. The equivalent weight is 396.
Trimer 20 - The triisocyanurate of an approximately 1:1 mixture of 1,3-bis(isocyanotomethyl)cyclohexane and 1,4- bis(isocyanotomethyl)cyclohexane modified with a caprolactone based monol (Tone ADT LC available from The Dow Chemical Company). The equivalent weight is 368.
Acrylic Polymer 1 - An acrylic polyol commercially available from Bayer Corporation as Desmophen A-365 with an equivalent weight of 607.
Acrylic Polymer 2 - An acrylic polyol commercially available from S.C. Johnson as Joncryl 920 with an equivalent weight of 500.
Catalyst 1 - Dibutyltin dilaurate commercially available from Air Products Company as Dabco T-12.
Additive 1 - A flow additive commercially available from BYK Chemie as Bait 320.
Solvent I - n-Butyl acetate commercially available from The Dow Chemical Company.
Solvent 2 - Ethyl-3-ethoxy propionate commercially available from The Dow Chemical Company.

Film thickness of the coating was determined by following ASTM D 1186.

Impact resistance of the coating was determined by using a Gardner impact tester and following ASTM D 2794.

Pendulum Hardness of the coating was determined by using a Konig pendulum hardness tester and is reported in seconds.

The pencil hardness of the film was measured by following ASTM D 3363.

Vickers hardness and Young's modulus were measured with a Fischer H100 microhardness tester using a Vickers identor and a load from 0.4 to 10 Mn applied to the coating over 20 seconds.

The acid etch resistance of the coating was determined by using a BYK Chemie gradient temperature oven and was reported as the lowest temperature (in °C) that a 10 percent solution of H₂SO₄ would cut through to the substrate if left on the coating for 15 minutes. The higher the temperature, the more resistant the coating was to acid.

Solvent resistance of the coating was reported as the number of methyl ethyl ketone (MEK) double rubs that were required to cut through the coating to the substrate.

BK3 dry time (dry-hard time) of the coating was measured by using a straight line B.K. drying recorder.

Cotton time (dust-free time) was measured as the time when the coating was sufficiently dry so that cotton fibers do not stick to the surface of the coating when a cotton swab is pressed against the coating's surface.

Gel time was measured as the time required for the coating formulation to gel after mixing the polyol component and the isocyanate component. A longer gel time corresponds to a longer pot life for the coating formulation.

UV resistance of the coatings was measured as the percent gloss retention after 2000 hours of exposure in a QUV accelerated weathering chamber where the exposure cycle was varied between 4 hours of uv light (UVA-340 bulb) and 4 hours of darkness at 100 percent relative humidity.

### Example 1 and Comparative Examples 2 and 3

6.1 grams of Acrylic Polymer I was added to a clean, dry, wide-mouthed bottle and then 3.2 grams of Solvent 1 and 1.5 grams of Solvent 2 were mixed with Acrylic Polymer 1. For example 1, 3.7 grams of Trimer 1 (5 percent molar excess of isocyanate to hydroxyl groups) and 0.0145 grams of Additive 1 were then added to the acrylic solution. The formulation was then mixed thoroughly and allowed to sit for five minutes to allow for the air bubbles to dissipate. The formulation was then drawn down on polished cold rolled steel panels (which were cleaned with acetone and dried in an oven) using a #46 wire wound rod to achieve a dry film thickness between 1.5 to 2.0 mils (38 to 50 micrometres). The wet coating films were allow to flash at room temperate for 10 minutes and then baked in an oven at 120°C for 20 minutes. The oven-cured coatings were allowed to stand for 24 hours before their physical

properties were measured. For comparative example 2, 3.8 grams of Trimer 2 was used in the place of Trimer 1. For comparative example 3, 2.3 grams of Trimer 3 was used in the place of Trimer 1.

These results of examples 1-3 show that the Trimer of this invention (Trimer 1) gives coatings with the best balance of properties relative to Trimers known in the art. The hardness and acid etch resistance of the coating based on Trimer 1 are superior to the coating based on Trimer 3. The flexibility (as measured by impact resistance and Young's modulus) of the coating based on Trimer 1 is superior to the coating based on Trimer 2.

| Tests | Example 1 (Trimer 1) | Comparative Example 2 (Trimer 2) | Comparative Example 3 (Trimer 3) |
|---|---|---|---|
| Acid Etch Resistance Severe Defect (°C) | 91 | 92 | 89 |
| Pencil Hardness | 3H | 3H | H |
| Vickers Hardness (N/mm²) | 175 | 179 | 146 |
| Young's Modulus (Gpa) | 4.0 | 4.1 | 3.6 |
| Impact Resistance Direct | 90 in.-lb. (10 J) | 40 in.-lb. (4.5 J) | 150 in.-lb. (17 J) |

### Example 4 and Comparative Examples 5 and 6

The process of examples 1-3 was used, except that Acrylic Polymer 2 was used in the place of Acrylic Polymer 1.

The results of example 4 and comparative examples 5 and 6 show a similar superiority in coating properties for the coating based on Trimer 1, as illustrated in the previous examples.

| Tests | Example 4 (Trimer 1) | Comparative Example 5 (Trimer 2) | Comparative Example 6 (Trimer 3) |
|---|---|---|---|
| Pencil Hardness | 3H | 3H | F |
| Pendulum Hardness (Konig, sec.) | 169 | 172 | 92 |
| Impact Resistance Direct | 80 in.-lb. (9 J) | 40 in.-lb. (4.5 J) | >200 in.-lb. (>23 J) |

### Example 7 and Comparative Examples 8 and 9

The procedure of examples 1-3 was used, except that Trimers 4 and 5 were used in the place of Trimers 2 and 3.

The results of example 7 and comparative examples 8 and9 show the relative effects of each isomer (1,3 versus 1,4) on final coatings properties. The coating prepared from Trimer 4 are slightly more flexible and slightly less hard than the coatings prepared from Trimer 5. Trimer 1, which contains both isomers, gives coatings with the best overall balance of properties.

| Tests | Example 7 (Trimer 1) | Comparative Example 8 (Trimer 4) | Comparative Example 9 (Trimer 5) |
|---|---|---|---|
| Vickers Hardness (N/mm²) | 175 | 166 | 187 |
| Young's Modulus (Gpa) | 4.0 | 3.8 | 4.4 |
| Impact Resistance Direct | 90 in.-lb. (10 J) | 90 in.-lb. (10 J) | 80 in.-lb. (9 J) |

### Example 10 and Comparative Examples 11 and 12

Same as examples 1-3, except the films were allowed to dry at room temperature (25°C), using 0.10 weight percent (on total solids) of Catalyst 1.

The results of example 10 and comparative examples 11 and 12 show that coatings based on Trimer 1 dry faster and have better solvent resistance than coatings based on Trimer 2. Coatings based on Trimer 1 also have better hardness than coatings based on Trimer 3.

| Tests | Example 10 (Trimer 1) | Comparative Example 11 (Trimer 2) | Comparative Example 12 (Trimer 3) |
|---|---|---|---|
| Pendulum Hardness 24 hours | 96 | 112 | 73 |
| 48 hours (Konig, sec.) | 133 | 148 | 102 |
| Solvent Resistance 24 hours (# of MEK double rubs) | >100 | 42 | >100 |
| BK 3 Dry Time (minutes) | 50 | 75 | 30 |

### Example 13 and Comparative Examples 14 and 15

The general procedure of examples 1-3 is followed to prepare a white pigmented formulation using Acrylic Polymer 2 in the place of Acrylic Polymer 1 and titanium dioxide as the white pigment. The pigment to polymer ratio was 0.56. The films are allowed to dry at room temperature for 7 days.

The results of example 13 and comparative examples 14 and 15 show that Trimer 1 has the best UV resistance.

| Tests | Example 13 (Trimer 1) | Comparative Example 14 (Trimer 2) | Comparative Example 15 (Trimer 3) |
|---|---|---|---|
| UV Resistance percent Gloss Retention | 92 | 86 | 79 |

### Examples 16 and Comparative Examples 17 and 18

The general procedure of examples 1-3 is followed using Acrylic Polymer 2 in place of Acrylic Polymer 1 and Trimers 6, 7, and 8 in the place of Trimers 1, 2 and 3. The films are allowed to dry at room temperature (25°C), using 0.03 weight percent (on total formulation) of Catalyst 1.

The results of example 16 and comparative examples 17 and 18 show the relative effects of each isomer (1,3 versus 1,4) on final coatings properties. The coatings prepared from Trimer 7 are more flexible and less hard than the coatings prepared from Trimer 8. Trimer 6, which contains both isomers, gives coatings with the best overall balance of properties.

| Tests | Example 16 Trimer 6 | Comparative Example 17 Trimer 7 | Comparative Example 18 Trimer 8 |
|---|---|---|---|
| Pendulum Hardness 24 hours | 115 | 95 | 122 |
| 48 hours (Konig, sec.) | 127 | 112 | 137 |
| Impact Resistance Direct | >200 in.-lb. (>23 J) | >200 in.-lb. (>23 J) | 100 in.-lb. (11 J) |

### Example 19-22

The procedure of examples 1-3 is used, except that Trimers 11, 12, 13 and 14 are used in the place of Trimers 1-3.

These results of examples 19-22 illustrate that the hardness of the coatings increase as the level of the triisocyanurate of an approximately 1:1 mixture of 1,3-bis(isocyanotomethyl)cyclohexane and 1,4- bis(isocyanotomethyl)cyclohexane in Trimers 11-14 increases.

| Example | Example 19 Trimer 11 | Example 20 Trimer 12 | Example 21 Trimer 13 | Example 22 Trimer 14 |
|---|---|---|---|---|
| Impact Resistance Direct | >200 in.-lb. (>23 J) | >200 in.-Ib. (>23 J) | 200 in.-lb. (>23 J) | 140 in.-lb. (16 J) |
| Pencil Hardness | H | 2H | 3H | 3H |

### Examples 23 and 25 and Comparative Example 24

The general procedure of examples 1-3 is used using Acrylic Polymer 2 and a 1/1 mixture of Trimers 1 and 3. The films are allowed to dry at room temperature (25°C), using 0.01 weight percent (on total formulation) of Catalyst 1.

The results of examples 23 and 25 and comparative example 24 show that coatings based on Trimer 1 have a longer gel time and dry faster than coatings based on Trimers 3 and a 1/1 mixed of Trimer 3 and 1. Coatings based on Trimer 1 also have better hardness than coatings based on Trimer 3.

| Example | Example 23 Trimer 1 | Comparative Example 24 Trimer 3 | Example 25 Trimer 1 & 3 (1/1 ratio) |
|---|---|---|---|
| Pendulum Hardness (Konig, sec.) | 141 | 69 | 107 |
| Gel Time (minutes) | 225 | 90 | 180 |
| Cotton Time (minutes) | 150 | >300 | 210 |

### Examples 26 - 31

The general procedure of examples 1-3 is followed using Acrylic Polymer 2 and Trimers 15-20 were used in the place of Trimers 1-3. The films were allowed to dry at room temperature (25°C), using 0.03 weight percent (on total formulation) of Catalyst 1.

The results of examples 26 - 31 illustrate that the triisocyanurate of an approximately 1:1 mixture of 1,3- bis(isocyanotomethyl)cyclohexane and 1,4-bis(isocyanotomethyl)cyclohexane can be partially blocked with different monols and give coatings with superior properties.

| Examples | Example 26 Trimer 15 | Example 27 Trimer 16 | Example 28 Trimer 17 | Example 29 Trimer 18 | Example 30 Trimer 19 | Example 31 Trimer 20 |
|---|---|---|---|---|---|---|
| Pendulum Hardness (Konig, sec.) | III | 110 | 114 | 122 | 120 | 106 |
| BK 3 Dry Time (minutes) | 80 | 75 | 105 | 80 | 75 | 75 |
| Impact Resistance Direct | 140 in.-lb. (16 J) | 140 in.-lb. (16 J) | 140 in.-lb. (16 J) | 160 in.-lb. (18 J) | 140 in.-lb. (16 J) | 140 in.-lb. (16 J) |

### Examples 32 and 33 Formation of high and low IRI trimers

To a 1.8L hastelloy reactor equipped with a gas bubbler, mechanical stirrer, thermometer and condenser are added 1600 grams of 1,3/1,4 ADI. Dry nitrogen is bubbled through the stirred reaction mixture while it is heated at 70°C. For example 35, 1.9 grams of a 75 percent solution of quaternary ammonium carboxylate in ethyleneglycol are added to the reaction mixture. The reaction temperature is maintained between 70 and 75°C. When the reaction mixture reaches an NCO content of 30 percent, the reaction is stopped by adding 0.5 g of chloroacetic acid. The excess monomer is separated in a short path distillation unit to provide a clear product. The trimer oligomers are dissolved in butylacetate to obtain a product containing 30wt percent butylacetate, an NCO content of 12.8 percent and a free monomer content of less than 0.5wt percent. Analysis of the oligomer distribution indicates the product contains 45 percent IR1, 22 percent IR2 and 33 percent higher MW oligomers. For example 36, 2.8 g of a 75 percent solution of quaternary ammonium carboxylate in ethyleneglycol are added to the reacting mixture. The reaction temperature is maintained between 70 and 75°C. When the reaction mixture reaction temperature is maintained between 70 and 75°C. When the reaction mixture reaches an NCO content of 25 percent, the reaction is stopped by adding 1 g of chloroacetic acid. The unreacted monomer is separated in a short path distillation unit to provide a clear product. The trimer oligomers are dissolved in butylacetate to obtain a product containing 30wt percent butylacetate, an NCO content of 12.0 percent and a free monomer content of less than 0.5wt percent. Analysis of the oligomer distribution indicate the product contains 29 percent IR1, 20 percent IR2 and 51 percent higher MW oligomers.

### Example 34- Formation of trimer using ammonium hydroxide catalyst

To a six-gallon stainless steel reactor equipped with a gas bubbler, mechanical stirrer, thermometer and condenser is added 6000 grams of 1,3/1,4 ADI. Dry nitrogen is bubbled through the stirred reaction mixture while it is heated at 50°C. 18 grams of a 40 percent solution of trimethylbenzyl ammonium hydroxide in methanol are added to initiate the reaction. The reaction temperature is maintained between 50 and 55°C. When the reaction mixture reaches an NCO content of 31.5 percent, the reaction is stopped by adding 3 g of chloroacetic acid. The excess monomer is separated in a short path distillation unit to provide a clear product having an NCO content of 12.9 percent and a free monomer less than 0.5wt percent.

### Example 35- 1,3/1,4 trimer partially blocked with n-decanol

To the equipment described in Example 32 are added 760 g of the product prepared in example 35 and 47 g of n-decanol. The reacting mixture is heated to 80°C and maintained at that temperature until the reaction is complete. The contents of the reactor are diluted with some additional butylacetate to reach 30wt percent butylacetate to obtain a clear product with an equivalent molecular weight of 412.

Other embodiments of the invention will be apparent to those skilled in the art from a consideration of this specification or practice of the invention disclosed herein. It is intended that the specification and examples be considered as exemplary only, with the true scope and spirit of the invention being indicated by the following claims.

## Claims

1. An isocyanurate polyisocyanate composition comprising the reaction product of a mixture of 1,3-bis(isocyanatomethyl)cyclohexane and 1,4-bis(isocyanatomethyl)cyclohexane isomers with the proviso that the isomeric mixture comprises at least 5 weight percent of the 1,4-isomer.

2. The composition of Claim 1 wherein the isomeric mixture comprises at least 10, preferably at least 20 and preferably at least 30 weight percent of the 1,4-isomers.

3. The composition of Claim 1 wherein the isocyanurate polyisocyanate composition comprises from 20 to 80 weight percent of compounds containing one isocyanurate ring moiety.

4. The composition of Claim 1 wherein 0.1 to 50 weight percent of at least one different polyfunctional isocyanate is present in the composition.

5. The composition of Claim 1 wherein 1 to 50 weight percent of an isocyanurate polyisocyanate derived from hexamethylene diisocyanate, isophorone diisocyanate or a mixture thereof is present in the composition.

6. The composition of Claim 1 wherein the isocyanurate polyisocyanate composition is admixed with at least one compound containing one functional group reactive with an isocyanate.

7. The composition of Claim 6 wherein the compound has a molecular weight of less than 2000 and the isocyanate reactive group is a hydroxyl or an amine group.

8. The composition of Claim 1 wherein the isocyanurate polyisocyanate composition is admixed with at least one compound containing two or more functional groups reactive with an isocyanate.

9. The composition of Claim 8 wherein the compound has a molecular weight of less than 2000 and the isocyanate reactive groups are hydroxyl or amine groups.

10. A process for the preparation of an isocyanurate polyisocyanate mixture comprising partially cyclizing an organic diisocyanate in the presence of a trimerization catalyst, deactivating the trimerization catalyst when the cyclization is complete, wherein the diisocyanate comprises a mixture of 1,3-bis(isocyanotomethyl)cyclohexane and 1,4- bis(isocyanotomethyl)cyclohexane isomers with the proviso that the isomeric mixture comprises at least 5 weight percent of the 1,4-isomer.

11. The process of Claim 10 wherein the isomeric mixture comprises at least 10, preferably at least 20 and preferably at least 30 weight percent of 1,4-isomer.

12. The process of Claim 10 wherein the isocyanurate polyisocyanate composition comprises from 30 to 60 weight percent of compounds containing one isocyanurate ring.

13. The process of Claim 10 wherein 0.1 to 50 weight percent of a different polyfunctional isocyanate is present in the diisocyanate.

14. The process of Claim 10 wherein the isocyanurate polyisocyanates composition has an NCO content of 12 to 30 percent by weight.

15. An isocyanurate polyisocyanate composition of Claim 1 wherein a isocyanurate polyisocynate derived from a different polyfunctional diisocyanate is blended with the isocyanurate polyisocyanate composition.

## Patentansprüche

1. Isocyanurat-Polyisocyanat-Zusammensetzung umfassend das Reaktionsprodukt von einem Gemisch von 1,3-Bis(isocyanatomethyl)cyclohexan und 1,4-Bis(isocyanatomethyl)cyclohexan Isomeren, mit der Maßgabe, das das Isomerengemisch mindestens 5 Gewichtsprozent von dem 1,4-Isomer umfasst.

2. Zusammensetzung nach Anspruch 1, wobei das Isomerengemisch mindestens 10, bevorzugt mindestens 20 und bevorzugt mindestens 30 Gewichtsprozent von den 1,4-Isomeren umfasst.

3. Zusammensetzung nach Anspruch 1, wobei die Isocyanurat-Polyisocyanat-Zusammensetzung von 20 bis 80 Gewichtsprozent von Verbindungen, die eine Isocyanuratringgruppe enthalten, umfasst.

4. Zusammensetzung nach Anspruch 1, wobei 0.1 bis 50 Gewichtsprozent von mindestens einem unterschiedlichen polyfunktionalem Isocyanat in der Zusammensetzung vorhanden ist.

5. Zusammensetzung nach Anspruch 1, wobei 1 bis 50 Gewichtsprozent von einem Isocyanurat-Polyisocyanat, abgeleitet von Hexamethylendiisocyanat, Isophorondüsocyanat oder ein Gemisch davon, in der Zusammensetzung vorhanden ist.

6. Zusammensetzung nach Anspruch 1, wobei der Isocyanurat-Polyisocyanat-Zusammensetzung, mindestens eine Verbindung, enthaltend eine funktionelle Gruppe, welche mit einem Isocyanat reaktiv ist, beigemischt ist.

7. Zusammensetzung nach Anspruch 6, wobei die Verbindung ein Molekulargewicht von weniger als 2000 hat und die Isocyanatreaktive Gruppe, eine Hydroxyl- oder eine Amingruppe ist.

8. Zusammensetzung nach Anspruch 1, wobei der Isocyanurat-Polyisocyanat-Zusammensetzung, mindestens eine Verbindung, enthaltend zwei oder mehr funktionelle Gruppen, welche mit einem Isocyanat reaktiv sind, beigemischt ist.

9. Zusammensetzung nach Anspruch 8, wobei die Verbindung ein Molekulargewicht von weniger als 2000 hat und die Isocyanatreaktiven Gruppen, Hydroxyl- oder Amingruppen sind.

10. Verfahren für die Herstellung von einem lsocyanurat Polyisocyanat Gemisch umfassend teilweises zyklisieren eines organischen Diisocyanats in der Gegenwart von einem Trimerisierungskatalysator, deaktivieren des Trimerisierungskatalysators wenn die Zyklisierung komplett ist, wobei das Diisocyanat ein Gemisch von 1,3-Bis(isocyanotomethyl)cyclohexan und 1,4-Bis(isocyanotomethyl)cyclohexan Isomeren umfasst, mit der Maßgabe, das das Isomeren Gemisch mindestens 5 Gewichtsprozent von dem 1,4-Isomer umfasst.

11. Verfahren nach Anspruch 10, wobei das Isomerengemisch mindestens 10, bevorzugt mindestens 20 und bevorzugt mindestens 30 Gewichtsprozent von dem 1,4-Isomer umfasst.

12. Verfahren nach Anspruch 10, wobei die lsocyanurat-Polyisocyanat-Zusammensetzung von 30 bis 60 Gewichtsprozent von Verbindungen, die ein Isocyanuratring enthalten, umfasst.

13. Verfahren nach Anspruch 10, wobei 0.1 bis 50 Gewichtsprozent, von einem unterschiedlichen polyfunktionalem Isocyanat, in dem Diisocyanat vorhanden ist.

14. Verfahren nach Anspruch 10, wobei die Isocyanurat-Polyisocyanat-Zusammensetzung einen NCO Gehalt von 12 bis 30 Gewichtsprozent hat.

15. Isocyanurat-Polyisocyanat-Zusammensetzung nach Anspruch 1, wobei ein Isocyanurat-Polyisocyanat, welches abgeleitet von einem verschiedenen polyfunktionalem Diisocyanat, gemischt mit der Isocyanurat-Polyisocyanat-Zusammensetzung, ist.

## Revendications

1. Composition d'isocyanurate-polyisocyanates, comprenant le produit de réaction d'un mélange des isomères 1,3-bis(isocyanato-méthyl)-cyclohexane et 1,4-bis(isocyanato-méthyl)-cyclohexane, sous condition que le mélange d'isomères comprenne au moins 5 % en poids de l'isomère 1,4.

2. Composition conforme à la revendication 1, pour laquelle le mélange d'isomères comprend au moins 10 %, de préférence au moins 20 % et mieux encore au moins 30 % en poids des isomères 1,4.

3. Composition conforme à la revendication 1, laquelle composition d'isocyanurate-polyisocyanates comprend de 20 à 80 % en poids de composés comportant un et un seul groupe cyclique isocyanurate.

4. Composition conforme à la revendication 1, dans laquelle il y a de 0,1 à 50 % en poids d'au moins un isocyanate polyfonctionnel différent.

5. Composition conforme à la revendication 1, dans laquelle il y a de 1 à 50 % en poids d'un isocyanurate-polyisocyanate dérivé de l'hexaméthylène-diisocyanate, de l'isophorone-diisocyanate ou d'un mélange de ceux-ci.

6. Composition conforme à la revendication 1, laquelle composition d'isocyanurate-polyisocyanates est mélangée avec au moins un composé comportant un et un seul groupe fonctionnel réactif vis-à-vis d'un isocyanate.

7. Composition conforme à la revendication 6, dans laquelle ledit composé présente une masse molaire inférieure à 2000, et ledit groupe réactif vis-à-vis d'un isocyanate est un groupe hydroxyle ou un groupe amino.

8. Composition conforme à la revendication 1, laquelle composition d'isocyanurate-polyisocyanates est mélangée avec au moins un composé comportant au moins deux groupes fonctionnels réactifs vis-à-vis d'un isocyanate.

9. Composition conforme à la revendication 8, dans laquelle ledit composé présente une masse molaire inférieure à 2000, et lesdits groupes réactifs vis-à-vis d'un isocyanate sont des groupes hydroxyle ou amino.

10. Procédé de préparation d'un mélange d'isocyanurate-polyisocyanates, qui comporte le fait de réaliser une cyclisation partielle d'un diisocyanate organique en présence d'un catalyseur de trimérisation, et le fait de désactiver le catalyseur de trimérisation quand la cyclisation est finie, et dans lequel ledit diisocyanate comprend un mélange des isomères 1,3-bis(isocyanato-méthyl)-cyclohexane et 1,4-bis(isocyanato-méthyl)-cyclohexane, sous condition que le mélange d'isomères comprenne au moins 5 % en poids de l'isomère 1,4.

11. Procédé conforme à la revendication 10, dans lequel le mélange d'isomères comprend au moins 10 %, de préférence au moins 20 % et mieux encore au moins 30 % en poids de l'isomère 1,4.

12. Procédé conforme à la revendication 10, dans lequel la composition d'isocyanurate-polyisocyanates comprend de 30 à 60 % en poids de composés comportant un et un seul groupe cyclique isocyanurate.

13. Procédé conforme à la revendication 10, dans lequel il y a de 0,1 à 50 % en poids d'un isocyanate polyfonctionnel différent dans ledit diisocyanate.

14. Procédé conforme à la revendication 10, dans lequel la composition d'isocyanurate-polyisocyanates présente une teneur en groupes isocyanate NCO de 12 à 30 % en poids.

15. Composition d'isocyanurate-polyisocyanates, conforme à la revendication 1, dans laquelle un isocyanurate-polyisocyanate dérivé d'un diisocyanate polyfonctionnel différent est mélangé avec la composition d'isocyanurate-polyisocyanates.
